# EUROPEAN PATENT SPECIFICATION

(11) **EP 4 005 993 B1**
(45) Date of publication and mention of the grant of the patent: **26.11.2025**
(21) Application number: 20848031.9
(22) Date of filing: 04.06.2020
(51) Int. Cl.: C03C 25/106, C03C 25/285, C03C 25/47, G02B 6/44, C03C 25/1065, C08F 290/06, C08G 18/48, C08G 18/67, C08G 18/75, C08G 18/76, C08K 3/36, C08K 9/06, C08K 3/22, C09D 175/16

(54) **OPTICAL FIBER RIBBON AND OPTICAL FIBER CABLE**
GLASFASERBAND UND GLASFASERKABEL
RUBAN DE FIBRES OPTIQUES ET CÂBLE À FIBRES OPTIQUES

(30) Priority: 26.07.2019 JP 2019137900
(43) Date of publication of application: 01.06.2022
(73) Proprietor: SUMITOMO ELECTRIC INDUSTRIES, LTD., Osaka-shi, Osaka 541-0041 (JP)
(72) Inventor: IWAGUCHI, Noriaki, Osaka-shi, Osaka 541-0041 (JP); HAMAKUBO, Katsushi, Osaka-shi, Osaka 541-0041 (JP); TOKUDA, Chiaki, Osaka-shi, Osaka 541-0041 (JP)
(74) Representative: Hoffmann Eitle
(86) International application number: PCT/JP2020/022108
(87) International publication number: WO 2021/019908

(56) References cited:
- EP-A1- 3 988 514
- WO-A1-2017/094560
- WO-A1-2018/117068
- WO-A1-2019/172443
- CN-A- 104 312 065
- JP-A- 2009 518 664
- JP-A- 2013 037 192
- JP-A- 2018 526 687
- JP-A- H02 118 608
- JP-A- H02 118 608
- US-A1- 2008 045 623
- US-A1- 2017 307 814
- US-A1- 2018 273 427
- US-A1- 2018 320 003

## Description

### Technical Field

The present disclosure relates to an optical fiber ribbon and an optical fiber cable.

### Background Art

An optical fiber tape core wire in which a plurality of optical fiber wires are arranged and integrated with a batch coating layer is known (for example, Patent Literature 1). The batch coating layer is formed of a UV curable resin.

Patent Literature 2 describes an upjacketed optical fiber comprising an optical fiber upjacketed layer comprising a cured product of an upjacket composition comprising inorganic particles or polymer particles. A plurality of upjacketed fibers may be bundled with a ribbon matrix material to form an optical fiber ribbon.

Patent Literature 3 describes an optical fiber and an optical fiber ribbon. The optical fiber comprises a coating resin layer having a colored layer. The coating resin layer may contain a titanium element and the colored layer may contain a pigment.

Patent Literature 4 describes a coated optical fiber tape comprising a plurality of optical fibers arranged in a tape-like coating layer made of an ultraviolet curable resin to which silica fine powder has been added.

Patent Literature 5 describes an optical fiber comprising a glass fiber, a primary resin layer and a secondary resin layer. The secondary resin layer is a cured product of a resin composition comprising a photopolymerizable compound, a photopolymerization initiator and optionally inorganic oxide particles. A plurality of optical fibers may be integrated with a ribbon resin to form an optical fiber ribbon.

### Citation List

### Patent Literature

[Patent Literature 1] Japanese Unexamined Patent Publication No. H05-019150
[Patent Literature 2] US 2008/045623 A1
[Patent Literature 3] US 2017/307814 A1
[Patent Literature 4] JP H02 118608 A
[Patent Literature 5] EP 3 988 514 A1

### Summary of Invention

An optical fiber ribbon according to one aspect of the present disclosure is an optical fiber ribbon in which a plurality of optical fibers are covered with a ribbon resin, and the ribbon resin is a cured product of a resin composition including a base resin containing oligomers, monomers and a photopolymerization initiator, and inorganic oxide particles. The inorganic oxide particles are particles containing at least one selected from the group consisting of silicon dioxide, zirconium dioxide, aluminum oxide, magnesium oxide, titanium oxide, tin oxide and zinc oxide, are hydrophobic and a UV curable reactive group is introduced as a hydrophobic group into a surface of the inorganic oxide particles. The content of the inorganic oxide particles is 1 mass% or more and 45 mass% or less based on a total amount of the ribbon resin.

### Brief Description of Drawings

FIG. 1 is a schematic cross-sectional view showing one example of an optical fiber.
FIG. 2 is a schematic cross-sectional view showing an optical fiber ribbon according to one embodiment.

### Modes for carrying out the invention

### [Problem to be solved by present disclosure]

In order to further improve lateral pressure characteristics of an optical fiber tape core wire, it is conceivable to increase the Young's modulus of the batch coating layer. However, for example, if the Young's modulus is increased by adjusting an oligomer molecular weight of a base resin and proportions of a formulation, there is a risk of a curing strain being applied to the optical fiber increasing as the Young's modulus increases. Due to this curing strain, the transmission loss of the tape core wire tends to increase.

The present disclosure has been made in view of the above circumstances, and an object of the present disclosure is to provide an optical fiber ribbon which can realize improved lateral pressure characteristics and suppress an increase in transmission loss.

### [Effects of Present disclosure]

According to the present disclosure, it is possible to provide an optical fiber ribbon which can realize improved lateral pressure characteristics and suppress an increase in transmission loss.

### [Description of Embodiments of Present disclosure]

First, details of embodiments of the present disclosure will be listed and described.

An optical fiber ribbon according to one aspect of the present disclosure is an optical fiber ribbon in which a plurality of optical fibers are covered with a ribbon resin, and the ribbon resin is a cured product of a resin composition including a base resin containing oligomers, monomers and a photopolymerization initiator, and inorganic oxide particles. According to such an optical fiber ribbon, it is possible to realize improved lateral pressure characteristics and it is possible to suppress an increase in transmission loss. When the ribbon resin includes inorganic oxide particles, it is possible to increase the Young's modulus without increasing the curing strain. In addition, due to the inorganic oxide particles, it is possible to improve slipperiness on the surface of the optical fiber ribbon and suppress adhesion between ribbons. This is thought to be caused by the fact that fine irregularities due to inorganic oxide particles are formed on the surface of the ribbon. In addition, since an inorganic substance is contained, the surface hardness can be made higher compared to when the same Young's modulus is obtained with simply an organic substance. Due to these effects, it is thought that an optical fiber ribbon in which loss is unlikely to increase is obtained even if it is made into a cable. The optical fiber ribbon according to the present embodiment can be bent sharply when it is accommodated at a high density. For example, even if an optical fiber of φ200 or less, which is considered to have deteriorated lateral pressure characteristics, is used, it is possible to suppress an increase in transmission loss during bobbin winding or cable formation.

The inorganic oxide particles are particles containing at least one selected from the group consisting of silicon dioxide, zirconium dioxide, aluminum oxide, magnesium oxide, titanium oxide, tin oxide and zinc oxide. These particles have excellent dispersibility in the resin composition, and in this case the Young's modulus can be easily adjusted.

The inorganic oxide particles are hydrophobic. Inorganic oxide particles into which a hydrophobic group is introduced have excellent dispersibility in the resin composition.

The content of the inorganic oxide particles is 1 mass% or more and 45 mass% or less based on a total amount of the ribbon resin.

In one aspect, the average primary particle size of the inorganic oxide particles may be 650 nm or less.

In one aspect, the resin composition may further include a lubricant.

In one aspect, the Young's modulus of the ribbon resin at 23°C may be 1,100 MPa or more and 2,500 MPa or less.

An optical fiber ribbon according to one aspect of the present disclosure is an optical fiber ribbon in which a plurality of optical fibers are covered with a ribbon resin, wherein the ribbon resin includes inorganic oxide particles, and wherein the Young's modulus of the ribbon resin at 23°C is 1,100 MPa or more and 2,500 MPa or less. According to such an optical fiber ribbon, it is possible to realize improved lateral pressure characteristics and it is possible to suppress an increase in transmission loss.

In one aspect, the ribbon resin may further include a lubricant.

An optical fiber cable according to one aspect of the present disclosure is formed by accommodating the above optical fiber ribbon in a cable. The optical fiber cable including the optical fiber ribbon can also achieve both improved high lateral pressure characteristics and low transmission loss.

### [Details of Embodiments of Present Disclosure]

Specific examples of an optical fiber ribbon and an optical fiber cable according to an embodiment of the present disclosure will be described with reference to the drawings as necessary. Here, the present disclosure is not limited to such examples, and includes the scope described in the claims, and all modifications within the scope. In the following description, the same components in the description of the drawings will be denoted with the same reference numerals and redundant descriptions will be omitted.

### <Optical fiber ribbon>

An optical fiber ribbon is formed by covering a plurality of optical fibers with a ribbon resin.

### (Ribbon resin)

A ribbon resin (connecting resin) can be a cured product of a resin composition containing a base resin and inorganic oxide particles. The base resin contains oligomers, monomers and a photopolymerization initiator.

Regarding the oligomers, a urethane (meth)acrylate oligomer is preferably contained. Regarding the urethane (meth)acrylate oligomer, an oligomer obtained by reacting a polyol compound, a polyisocyanate compound and a hydroxy group-containing (meth)acrylate compound can be used. Here, (meth)acrylate means an acrylate or a methacrylate corresponding thereto. The same applies to (meth)acrylic acid.

Examples of polyol compounds include polytetramethylene glycol, polypropylene glycol and a bisphenol A-ethylene oxide addition diol. Examples of polyisocyanate compounds include 2,4-tolylene diisocyanate, 2,6-tolylene diisocyanate, isophorone diisocyanate and dicyclohexylmethane 4,4'-diisocyanate. Examples of hydroxy group-containing (meth)acrylate compounds include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate and tripropylene glycol di(meth)acrylate.

In order to adjust the Young's modulus of the cured product, the number average molecular weight (Mn) of the polyol compound may be 300 or more and 3,000 or less.

An organotin compound is generally used as a catalyst when urethane (meth)acrylate oligomers are synthesized. Examples of organotin compounds include dibutyltin dilaurate, dibutyltin diacetate, dibutyltin malate, dibutyltinbis(2-ethylhexyl mercaptoacetate), dibutyltinbis(isooctyl mercaptoacetate) and dibutyltin oxide. In consideration of ease of availability or catalytic performance, it is preferable to use dibutyltin dilaurate or dibutyltin diacetate as a catalyst.

When urethane (meth)acrylate oligomers are synthesized, a lower alcohol having 5 or less carbon atoms may be used. Examples of lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol and 2,2-dimethyl-1-propanol.

The oligomers may further include an epoxy (meth)acrylate oligomer. Regarding the epoxy (meth)acrylate oligomer, an oligomer obtained by reacting an epoxy resin having two or more glycidyl groups with a compound having a (meth)acryloyl group can be used.

Regarding the monomer, a monofunctional monomer having one polymerizable group and a polyfunctional monomer having two or more polymerizable groups can be used. A mixture of two or more types of monomers may be used.

Examples of monofunctional monomers include (meth)acrylate monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxybenzyl acrylate, phenoxydiethylene glycol acrylate, phenoxy polyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyl oxyethyl (meth)acrylate, dicyclopentanyl (meth)acrylate, nonylphenol polyethylene glycol (meth)acrylate, nonylphenol EO-modified acrylate, nonylphenoxy polyethylene glycol (meth)acrylate, and isobornyl (meth)acrylate; carboxylic group-containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocyclic ring-containing (meth)acrylates such as N-acryloyl morpholine, N-vinylpyrrolidone, N-vinyl caprolactam, N-acryloyl piperidine, N-methacryloyl piperidine, N-acryloyl pyrrolidine, 3-(3-pyridine)propyl (meth)acrylate, and cyclic trimethylolpropane formal acrylate; maleimide monomers such as maleimide, N-cyclohexyl maleimide, and N-phenylmaleimide; N-substituted amide monomers such as (meth)acrylamide, N,N-dimethyl (meth)acrylamide, N,N-diethyl (meth)acrylamide, N-hexyl (meth)acrylamide, N-methyl (meth)acrylamide, N-butyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N,N-dimethylaminoethyl (meth)acrylate, and tert-butylaminoethyl (meth)acrylate; and succinimide monomers such as N-(meth)acryloyl oxymethylene succinimide, N-(meth)acryloyl-6-oxyhexamethylene succinimide, and N-(meth)acryloyl-8-oxyoctamethylene succinimide.

Examples of polyfunctional monomers include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, a di(meth)acrylate of an alkylene oxide adduct of bisphenol A, tetraethylene glycol di(meth)acrylate, neopentyl glycol hydroxypivalate di(meth)acrylate, 1,4-butanediol di(meth)acrylate, 1,6-hexanediol di(meth)acrylate, 1,9-nonane diol di(meth)acrylate, 1,12-dodecane diol di(meth)acrylate, 1,14-tetradecane diol di(meth)acrylate, 1,16-hexadecane diol di(meth)acrylate, 1,20-eicosandiol di(meth)acrylate, isopentyldiol di(meth)acrylate, 3-ethyl-1,8-octanediol di(meth)acrylate, a di(meth)acrylate of an EO adduct of bisphenol A, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxypolypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxytetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate and caprolactone-modified tris[(meth)acryloyloxyethyl]isocyanurate.

Regarding the photopolymerization initiator, one can be appropriately selected from among known radical photopolymerization initiators and used. Examples of photopolymerization initiators include 1-hydroxycyclohexylphenyl ketone (Omnirad 184, commercially available from IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907, commercially available from IGM Resins), 2,4,6-trimethylbenzoyldiphenylphosphine oxide (Omnirad TPO, commercially available from IGM Resins) and bis(2,4,6-trimethylbenzoyl)phenylphosphine oxide (Omnirad 819, commercially available from IGM Resins).

The resin composition may further include a silane coupling agent, a leveling agent, an antifoaming agent, an antioxidant, a sensitizer, a lubricant, and the like.

The silane coupling agent is not particularly limited as long as it does not interfere with curing the resin composition. Examples of silane coupling agents include tetramethylsilicate, tetraethyl silicate, mercaptopropyltrimethoxysilane, vinyltrichlorosilane, vinyltriethoxysilane, vinyltris(β-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-y-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3-(triethoxysilyl)propyl]disulfide, γ-trimethoxysilylpropyl dimethylthiocarbamyltetrasulfide and γ-trimethoxysilylpropylbenzothiadyltetrasulfide.

Regarding the lubricant, for example, a silicone oil is used. The silicone oil is desirably a high-molecular-weight silicone oil or a modified silicone oil in which a part of a dimethylsiloxane framework is modified with an organic group, which is unlikely to precipitate on the surface over time. Examples of modified silicone oils include silicone oils subjected to polyether modification, amine modification, epoxy modification, mercapto modification, (meth)acrylic modification, carboxyl modification, or the like. When a lubricant is contained, it is possible to further suppress adhesion between ribbons, and it is possible to obtain a ribbon in which loss is unlikely to increase when it is made into a cable.

The viscosity of the resin composition at 45°C is preferably 300 mPa·s or more and 3,500 mPa·s or less, more preferably 300 mPa·s or more and 2,500 mPa·s or less, and still more preferably 300 mPa·s or more and 2,000 mPa·s or less. If the viscosity of the resin composition is too high, the coatability tends to decrease. On the other hand, if the viscosity of the resin composition is too low, an uneven thickness is likely to occur. In addition, the resin composition can be used as a coating material for an optical fiber as will be described below, and in this case, if the viscosity of the resin composition is too high, the coatability deteriorates, and a coating diameter when the resin layer is formed is not stable and the optical fiber is likely to break. On the other hand, if the viscosity of the resin composition is too low, the self-aligning force is unlikely to work and an uneven thickness is likely to occur.

### (Inorganic oxide particles)

The inorganic oxide particles are particles containing at least one selected from the group consisting of silicon dioxide (silica), zirconium dioxide (zirconia), aluminum oxide (alumina), magnesium oxide (magnesia), titanium oxide (titania), tin oxide and zinc oxide. Such particles have excellent dispersibility in the resin composition and in this case a Young's modulus is easily adjusted. In consideration of low cost, ease of a surface treatment, having UV transmission, ease of imparting an appropriate hardness to a cured product, and the like, silica particles are more preferably used as the inorganic oxide particles.

The inorganic oxide particles are hydrophobic and a UV curable reactive group is introduced as a hydrophobic group into a surface of the inorganic oxide particles. Specifically, the surface of the inorganic oxide particles is preferably hydrophobically treated with a silane compound. Here, the hydrophobic treatment means introducing a hydrophobic group into a surface of inorganic oxide particles. Inorganic oxide particles into which a hydrophobic group is introduced have excellent dispersibility in the resin composition. The hydrophobic group is a UV curable reactive group such as a (meth)acryloyl group and a vinyl group. In addition, a non-reactive group such as a hydrocarbon group (for example, an alkyl group) and an aryl group (for example, a phenyl group) may be introduced. When inorganic oxide particles have a reactive group, a resin layer having a high Young's modulus is easily formed.

Examples of silane compounds having a reactive group include silane compounds such as 3-methacryloxypropyltrimethoxysilane, 3-acryloxypropyltrimethoxysilane, 3-methacryloxypropyltriethoxysilane, 3-acryloxypropyltriethoxysilane, 8-methacryloxyoctyltrimethoxysilane, 8-acryloxyoctyltrimethoxysilane, 7-octenyltrimethoxysilane, vinyltrimethoxysilane and vinyltriethoxysilane.

Examples of silane compounds having an alkyl group include methyltrimethoxysilane, dimethyldimethoxysilane, ethyltrimethoxysilane, propyltrimethoxysilane, butyltrimethoxysilane, pentyltrimethoxysilane, hexyltrimethoxysilane, octyltrimethoxysilane, methyltriethoxysilane, dimethyldiethoxysilane, ethyltriethoxysilane, propyltriethoxysilane, butyltriethoxysilane, pentyltriethoxysilane, hexyltriethoxysilane and octyltriethoxysilane.

The inorganic oxide particles may be dispersed in a dispersion medium when added to the resin composition. When inorganic oxide particles dispersed in a dispersion medium are used, it is possible to uniformly disperse the inorganic oxide particles in the resin composition and it is possible to improve storage stability of the resin composition. The dispersion medium is not particularly limited as long as it does not inhibit curing the resin composition, and the dispersion medium may be reactive or non-reactive.

Regarding the reactive dispersion medium, monomers such as a (meth)acryloyl compound and an epoxy compound may be used. Examples of (meth)acryloyl compounds include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, polytetramethylene glycol di(meth)acrylate, 2-hydroxy-3-phenoxypropyl acrylate, a (meth)acrylic acid adduct of propylene glycol diglycidyl ether, a (meth)acrylic acid adduct of tripropylene glycol diglycidyl ether, and a (meth)acrylic acid adduct of glycerin diglycidyl ether. Regarding the dispersion medium, a (meth)acryloyl compound exemplified in monomers to be described below may be used.

Regarding the non-reactive dispersion medium, a ketone solvent such as methyl ethyl ketone (MEK) and methyl isobutyl ketone (MIBK), an alcohol solvent such as methanol (MeOH) and propylene glycol monomethyl ether (PGME), and an ester solvent such as propylene glycol monomethyl ether acetate (PGMEA) may be used. In the case of the non-reactive dispersion medium, a base resin and inorganic oxide particles dispersed in a dispersion medium may be mixed and a part of the dispersion medium may be then removed to prepare a resin composition.

In consideration of excellent dispersibility in the resin composition, the average primary particle size of the inorganic oxide particles may be 650 nm or less, and is preferably 600 nm or less, more preferably 500 nm or less, and still more preferably 400 nm or less. In consideration of excellent strength after curing, the average primary particle size of the inorganic oxide particles is preferably 5 nm or more and more preferably 10 nm or more. The average primary particle size can be measured by, for example, image analysis on electron microscopic images, a light scattering method, a BET method, or the like. A dispersion medium in which primary particles of the inorganic oxide particles are dispersed appears transparent visually when the particle size of the primary particles is small. When the particle size of the primary particles is relatively large (40 nm or more), the dispersion medium in which the primary particles are dispersed appears opaque, but no sediment is observed.

The content of the inorganic oxide particles is 1 mass% or more and 45 mass% or less, preferably 2 mass% or more and 40 mass% or less, and more preferably 3 mass% or more and 35 mass% or less based on a total amount of the resin composition (a total amount of the base resin and the inorganic oxide particles). When the content of the inorganic oxide particles is 1 mass% or more, a tough cured product is easily formed. When the content of the inorganic oxide particles is 45 mass% or less, a cured product in which the inorganic oxide particles are suitably dispersed is easily formed. Since the total amount of the resin composition and the total amount of the cured product of the resin composition can be substantially the same, the above regulation of the content of the inorganic oxide particles can also be applied for the total amount of the ribbon resin.

The Young's modulus of the ribbon resin at 23°C can be 1,100 MPa or more and 2,500 MPa or less, but is preferably 1,100 MPa or more and 2,000 MPa or less and more preferably 1,400 MPa or more and 2,000 MPa or less. When the Young's modulus of the ribbon resin is 1,100 MPa or more, the lateral pressure characteristics are easily improved, and when the Young's modulus is 2,500 MPa or less, since an appropriate toughness can be imparted to the ribbon resin, cracks and the like are unlikely to occur in the ribbon resin.

### (Optical fiber)

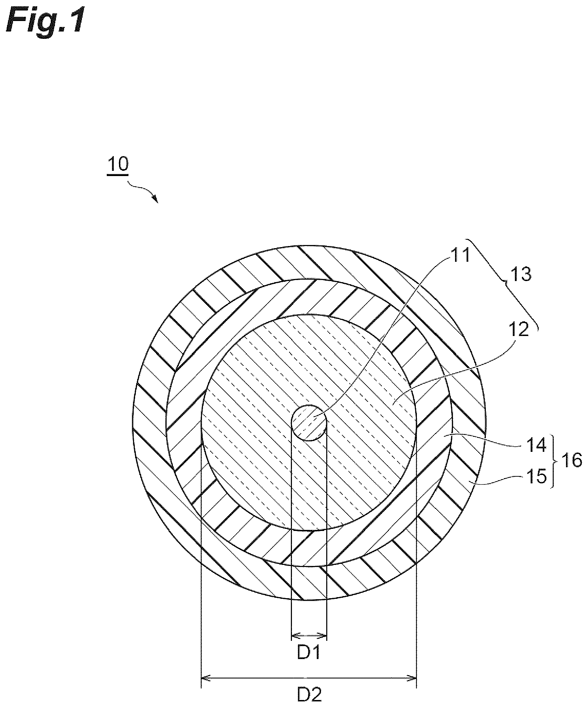

FIG. 1 is a schematic cross-sectional view showing one example of an optical fiber. An optical fiber 10 includes a glass fiber 13 including a core 11 and a clad 12, and a coating resin layer 16 including a primary resin layer 14 provided on the outer circumference of the glass fiber 13 and a secondary resin layer 15.

The clad 12 surrounds the core 11. The core 11 and the clad 12 mainly contain glass such as quartz glass. For example, quartz glass to which germanium is added or pure quartz glass can be used for the core 11, and pure quartz glass or quartz glass to which fluorine is added can be used for the clad 12.

In FIG. 1, for example, the outer diameter (D2) of the glass fiber 13 is about 100 µm or more and 125 µm or less, and the diameter (D1) of the core 11 constituting the glass fiber 13 is about 7 µm or more and 15 µm or less. The thickness of the coating resin layer 16 is generally about 22 µm or more and 70 µm or less. The thickness of each of the primary resin layer 14 and the secondary resin layer 15 may be about 5 µm or more and 50 µm or less.

When the outer diameter (D2) of the glass fiber 13 is about 125 µm and the thickness of the coating resin layer 16 is 60 µm or more and 70 µm or less, the thickness of each of the primary resin layer 14 and the secondary resin layer 15 may be about 10 µm or more and 50 µm or less. For example, the thickness of the primary resin layer 14 may be 35 µm, and the thickness of the secondary resin layer 15 may be 25 µm. The outer diameter of the optical fiber 10 may be about 245 µm or more and 265 µm or less.

When the outer diameter (D2) of the glass fiber 13 is about 125 µm and the thickness of the coating resin layer 16 is 27 µm or more and 48 µm or less, the thickness of each of the primary resin layer 14 and the secondary resin layer 15 may be about 10 µm or more and 38 µm or less, and for example, the thickness of the primary resin layer 14 may be 25 µm, and the thickness of the secondary resin layer 15 may be 10 µm. The outer diameter of the optical fiber 10 may be about 179 µm and 221µm or less.

When the outer diameter (D2) of the glass fiber 13 is about 100 µm and the thickness of the coating resin layer 16 is 22 µm or more and 37 µm or less, the thickness of each of the primary resin layer 14 and the secondary resin layer 15 may be about 5 µm or more and 32 µm or less, and for example, the thickness of the primary resin layer 14 may be 25 µm, and the thickness of the secondary resin layer 15 may be 10 µm. The outer diameter of the optical fiber 10 may be about 144 µm or more and 174 µm or less.

The resin composition for forming a ribbon resin can be applied to the secondary resin layer. The secondary resin layer can be formed by curing a resin composition containing the inorganic oxide particles and a base resin. Accordingly, it is possible to improve the lateral pressure characteristics of the optical fiber.

A method of producing an optical fiber includes a coating process in which the resin composition is applied to an outer circumference of a glass fiber composed of a core and a clad and a curing process in which UV rays are emitted to cure the resin composition after the coating process.

The Young's modulus of the secondary resin layer at 23°C is preferably 1,300 MPa or more, more preferably 1,300 MPa or more and 3,600 MPa or less, and still more preferably 1,400 MPa or more and 3,000 MPa or less. When the Young's modulus of the secondary resin layer is 1,300 MPa or more, the lateral pressure characteristics are easily improved, and when the Young's modulus is 3,600 MPa or less, since an appropriate toughness can be imparted to the secondary resin layer, cracks and the like are unlikely to occur in the secondary resin layer.

For example, the primary resin layer 14 can be formed by curing a resin composition containing urethane (meth)acrylate oligomers, monomers, a photopolymerization initiator and a silane coupling agent. For the resin composition for a primary resin layer, conventionally known technologies can be used. Regarding urethane (meth)acrylate oligomers, monomers, a photopolymerization initiator and a silane coupling agent, those may be appropriately selected from among compounds exemplified in the above base resin. However, the resin composition for forming a primary resin layer has a composition different from a base resin for forming a secondary resin layer.

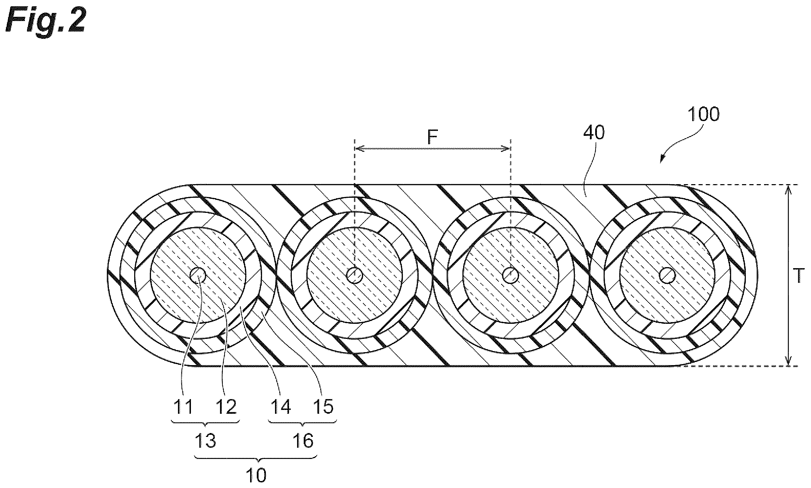

FIG. 2 is a schematic cross-sectional view showing an optical fiber ribbon according to one embodiment. As described above, an optical fiber ribbon 100 is formed by (integrally) covering a plurality of optical fibers 10 with a ribbon resin 40. In FIG. 2, four optical fibers 10 are shown as one example, but the number of optical fibers is not particularly limited.

The optical fibers 10 that are adjacent and parallel to each other may be integrated, or some or all of the optical fibers 10 that are parallel to each other at regular intervals may be integrated. However, a distance F between the centers of the adjacent optical fibers 10 is preferably 250±30 µm or less. When the distance between the centers is 250 µm, it is possible to obtain an optical fiber ribbon in which optical fibers are easily disposed in existing V grooves and which has excellent batch fusion properties.

The thickness T of the optical fiber ribbon 100 depends on the diameter of the optical fiber 10, but is preferably 164 µm or more and 285 µm or less. When the optical fibers 10 are parallel to each other at regular intervals, that is, when the adjacent optical fibers 10 are bonded via the ribbon resin 40 without contact with each other, the thickness of the ribbon resin at the center of the optical fibers 10 can be 20 µm or more and 40 µm or less.

### <Optical fiber cable>

An optical fiber cable is formed by accommodating the optical fiber ribbon in a cable. Examples of optical fiber cables include a slot type optical fiber cable having a plurality of slot grooves. The optical fiber ribbon can be mounted in the slot grooves so that the mounting density in the slot grooves is about 25% or more and 65% or less. The mounting density refers to a ratio of a cross-sectional area of the optical fiber ribbon mounted in the slot groove with respect to the cross-sectional area of the slot groove.

### [Examples]

Hereinafter, the results of evaluation tests using examples and a comparative example according to the present disclosure will be shown, and the present disclosure will be described in more detail. Here, the present disclosure is not limited to these examples.

### [Resin composition for forming ribbon resin]

### (Oligomers)

Regarding the oligomers, a urethane acrylate oligomer obtained by reacting polypropylene glycol having a molecular weight of 1,000, 2,4-tolylene diisocyanate and 2-hydroxyethyl acrylate was prepared.

### (Monomers)

Regarding the monomers, 2-phenoxyethyl acrylate, tripropylene glycol diacrylate, and N-vinyl caprolactam were prepared.

### (Photopolymerization initiator)

Regarding the photopolymerization initiator, 1-hydroxycyclohexylphenyl ketone and 2,4,6-trimethylbenzoyldiphenylphosphine oxide are prepared.

### (Inorganic oxide particles)

Regarding the inorganic oxide particles, hydrophobic silica particles having an average primary particle size of 10 nm or more and 15 nm or less, hydrophobic silica particles having an average primary particle size of 70 nm or more and 100 nm or less, and hydrophobic silica particles having an average primary particle size of 250 nm or more and 350 nm or less were prepared. These silica particles had a methacryloyl group and were dispersed in methyl ethyl ketone (MEK).

70 parts by mass of urethane acrylate oligomers, 10 parts by mass of 2-phenoxyethyl acrylate, 13 parts by mass of tripropylene glycol diacrylate, 5 parts by mass of N-vinyl caprolactam, 1 part by mass of 1-hydroxycyclohexylphenyl ketone, and 1 part by mass of 2,4,6-trimethylbenzoyldiphenylphosphine oxide were mixed to prepare a base resin.

Next, respective silica sols were mixed with a base resin to have the content of silica particles shown in Table 1, and most of MEK as a dispersion medium was then removed under a reduced pressure to prepare resin compositions (resin compositions for forming a ribbon resin) of examples and a comparative example. Here, in Example 7, a silicone oil was added as a lubricant to the resin composition in an amount shown in Table 1.

**[Table 1]**

| | Example | | | | | | | Comparative Example |
|---|---|---|---|---|---|---|---|---|
| | 1 | 2 | 3 | 4 | 5 | 6 | 7 | 1 |
| Average primary particle size of silica particles (mn) | 10 to 15 | 10 to 15 | 10 to 15 | 10 to 15 | 70 to 100 | 250 to 350 | 10 to 15 | - |
| Content of silica particles (mass%) | 10 | 20 | 30 | 45 | 20 | 45 | 20 | - |
| Content of silicone oil (mass%) | - | - | - | - | - | - | 1 | - |

### [Resin composition for secondary resin layer]

Polypropylene glycol having a molecular weight of 1,000, 60 parts by mass of urethane acrylate oligomers which were a reaction product of isophorone diisocyanate and 2-hydroxyethyl acrylate, 19 parts by mass of isobornyl acrylate, 20 parts by mass of trimethylolpropane triacrylate, and 1 part by mass of 2,4,6-trimethylbenzoyldiphenylphosphine oxide were mixed to prepare a resin composition for a secondary resin layer.

### [Resin composition for primary resin layer]

Polypropylene glycol having a molecular weight of 2,000, 75 parts by mass of urethane acrylate oligomers which were a reaction product of 2,4-tolylene diisocyanate, 2-hydroxyethyl acrylate, and methanol, 12 parts by mass of nonylphenol EO-modified acrylate, 6 parts by mass of N-vinyl caprolactam, 2 parts by mass of 1,6-hexanediol diacrylate, 1 part by mass of 2,4,6-trimethylbenzoyldiphenylphosphine oxide, and 1 part by mass of γ-mercaptopropyltrimethoxysilane were mixed to prepare a resin composition for a primary resin layer.

### [Production of optical fiber]

A resin composition for a primary resin layer and a resin composition for a secondary resin layer were applied to the outer circumference of a glass fiber composed of a core and a clad and having a diameter of 125 µm, and UV rays were then emitted to cure the resin compositions, and thereby an optical fiber having a diameter of 200 µm was produced by forming a primary resin layer having a thickness of 20 µm and a secondary resin layer having a thickness of 17.5 µm on the outer circumference thereof. The linear velocity was 1,500 m/min.

### [Production of optical fiber ribbon]

A resin composition for forming a ribbon resin was applied to the outer circumference of the four optical fibers that were adjacent and parallel to each other, and UV rays were then emitted to cure the resin composition. Thereby, an optical fiber ribbon having a thickness (thickness T shown in FIG. 2) of 230 µm was produced. The linear velocity when the resin composition was cured was 500 m/min.

### [Production of optical fiber cable]

A slot type optical fiber cable having 6 slot grooves was prepared. The optical fiber ribbon was mounted in the slot grooves so that the mounting density in the slot grooves was 50%. The mounting density refers to a ratio of a cross-sectional area of the optical fiber ribbon mounted in the slot groove with respect to the cross-sectional area of the slot groove.

### [Various evaluations]

The following evaluations were performed using the resin compositions for forming a ribbon resin and the optical fiber cables obtained in the examples and the comparative example. The results are shown in Table 2.

### (Young's modulus)

The resin composition was applied onto a polyethylene terephthalate (PET) film using a spin coater, and then cured under conditions of 1,000±100 mJ/cm² using an electrodeless UV lamp system (D valve) (commercially available from Heraeus). Thereby, a resin layer having a thickness of 200±20 µm was formed on the PET film. The resin layer was peeled off from the PET film to obtain a resin film.

The resin film was punched into a JIS K 7127 type 5 dumbbell shape and used as an evaluation sample. Under conditions of 23±2°C, 50±10% RH, this evaluation sample was pulled using a tensile testing machine under conditions of a tensile speed of 1 mm/min and a distance between marked lines of 25 mm, and a stress-strain curve was obtained. Then, the Young's modulus was determined according to a 2.5% secant line.

### (Cable loss characteristic)

The optical fiber cable was left in a low temperature (-40°C) environment, and the value of transmission loss when the wavelength of signal light was 1.55 µm was measured. The measured value was evaluated according to the following criteria.
A: Transmission loss was 0.3 dB/km or less.
B: Transmission loss was more than 0.3 dB/km and 0.5 dB/km or less.
C: Transmission loss was more than 0.5 dB/km.

**[Table 2]**

| | Example | | | | | | | Comparative Example |
|---|---|---|---|---|---|---|---|---|
| | 1 | 2 | 3 | 4 | 5 | 6 | 7 | 1 |
| Young's modulus (MPa) | 1,100 | 1,300 | 1,500 | 2,000 | 1,200 | 1,400 | 1,300 | 1,000 |
| Cable loss characteristic | B | B | A | A | B | B | A | C |

The optical fiber ribbon of the examples had excellent lateral pressure characteristics and was able to suppress an increase in transmission loss.

### Reference Signs List

10 Optical fiber
11 Core
12 Clad
13 Glass fiber
14 Primary resin layer
15 Secondary resin layer
16 Coating resin layer
40 Ribbon resin
100 Optical fiber ribbon

## Claims

1. An optical fiber ribbon in which a plurality of optical fibers are covered with a ribbon resin,
wherein the ribbon resin is a cured product of a resin composition including a base resin containing oligomers, monomers and a photopolymerization initiator, and inorganic oxide particles,
wherein the inorganic oxide particles are particles containing at least one selected from the group consisting of silicon dioxide, zirconium dioxide, aluminum oxide, magnesium oxide, titanium oxide, tin oxide and zinc oxide,
wherein the inorganic oxide particles are hydrophobic,
wherein a UV curable reactive group is introduced as a hydrophobic group into a surface of the inorganic oxide particles, and
wherein the content of the inorganic oxide particles is 1 mass% or more and 45 mass% or less based on a total amount of the ribbon resin.

2. The optical fiber ribbon according to claim 1,
wherein the average primary particle size of the inorganic oxide particles is 650 nm or less.

3. The optical fiber ribbon according to claim 1 or 2,
wherein the resin composition further includes a lubricant.

4. The optical fiber ribbon according to any one of claims 1 to 3, wherein the Young's modulus of the ribbon resin at 23°C is 1,100 MPa or more and 2,500 MPa or less.

5. An optical fiber cable in which the optical fiber ribbon according to any one of claims 1 to 4 is accommodated in a cable.

## Patentansprüche

1. Glasfaserband, in dem mehrere Glasfasern mit einem Bandharz bedeckt sind,
wobei das Bandharz ein gehärtetes Produkt einer Harzzusammensetzung ist, die ein Basisharz, das Oligomere, Monomere und einen Fotopolymerisationsstarter enthält, und anorganische Oxidpartikel einschließt,
wobei die anorganischen Oxidpartikel Partikel sind, die mindestens ein Oxid, ausgewählt aus der Gruppe, bestehend aus Siliciumdioxid, Zirkoniumdioxid, Aluminiumoxid, Magnesiumoxid, Titanoxid, Zinnoxid und Zinkoxid, enthalten,
wobei die anorganischen Oxidpartikel hydrophob sind, wobei eine UV-härtbare reaktive Gruppe als eine hydrophobe Gruppe in eine Oberfläche der anorganischen Oxidpartikel eingeführt ist, und
wobei der Anteil der anorganischen Oxidpartikel 1 Masse-% oder mehr und 45 Masse-% oder weniger, bezogen auf eine Gesamtmenge des Bandharzes, ist.

2. Glasfaserband gemäß Anspruch 1, in dem die mittlere Primärpartikelgröße der anorganischen Oxidpartikel 650 nm oder weniger ist.

3. Glasfaserband gemäß Anspruch 1 oder 2, wobei die Harzzusammensetzung ferner ein Schmiermittel einschließt.

4. Glasfaserband gemäß mindestens einem der Ansprüche 1 bis 3, in dem der Young-Modul des Bandharzes bei 23°C 1.100 MPa oder mehr und 2.500 MPa oder weniger ist.

5. Glasfaserkabel, in dem das Glasfaserband gemäß mindestens einem der Ansprüche 1 bis 4 in einem Kabel untergebracht ist.

## Revendications

1. Ruban de fibres optiques dans lequel une pluralité de fibres optiques sont recouvertes d'une résine en ruban,
dans lequel la résine en ruban est un produit durci d'une composition de résine incluant une résine de base contenant des oligomères, des monomères et un initiateur de photopolymérisation, et des particules d'oxyde inorganique,
dans lequel les particules d'oxyde inorganique sont des particules contenant au moins un élément sélectionné dans le groupe consistant en dioxyde de silicium, dioxyde de zirconium, oxyde d'aluminium, oxyde de magnésium, oxyde de titane, oxyde d'étain et oxyde de zinc,
dans lequel les particules d'oxyde inorganique sont hydrophobes,
dans lequel un groupe réactif durcissable par UV est introduit en tant que groupe hydrophobe dans la surface des particules d'oxyde inorganique, et
dans lequel la teneur des particules d'oxyde inorganique est de 1 % en masse ou plus et 45 % en masse ou moins sur la base d'une quantité totale de la résine en ruban.

2. Ruban de fibres optiques selon la revendication 1,
dans lequel la taille de particule primaire moyenne des particules d'oxyde inorganique est de 650 nm ou moins.

3. Ruban de fibres optiques selon la revendication 1 ou revendication 2,
dans lequel la composition de résine inclut en outre un lubrifiant.

4. Ruban de fibres optiques selon l'une quelconque des revendications 1 à 3,
dans lequel le module de Young de la résine en ruban à 23 °C est de 1100 MPa ou plus et de 2500 MPa ou moins.

5. Câble à fibres optiques dans lequel le ruban de fibres optiques selon l'une quelconque des revendications 1 à 4 est logé dans un câble.
